(19) Europäisches Patentamt
European Patent Office
Office européen des brevets

(11) **EP 4 169 974 B1**

(12) **EUROPEAN PATENT SPECIFICATION**

(45) Date of publication and mention of the grant of the patent:
**05.11.2025 Bulletin 2025/45**

(21) Application number: **21829434.6**

(22) Date of filing: **18.06.2021**

(51) International Patent Classification (IPC):
$C08K\ 3/22^{(2006.01)}$    $C08G\ 73/14^{(2006.01)}$
$C08G\ 73/10^{(2006.01)}$    $G02F\ 1/1335^{(2006.01)}$
$C09D\ 163/00^{(2006.01)}$    $C08L\ 79/08^{(2006.01)}$
$C08J\ 7/043^{(2020.01)}$    $C08J\ 7/04^{(2020.01)}$
$C08J\ 5/18^{(2006.01)}$    $C08G\ 59/32^{(2006.01)}$

(52) Cooperative Patent Classification (CPC):
(C-Sets available)
**C08J 5/18; C08G 73/1039; C08G 73/1042;
C08G 73/1067; C08G 73/14; C08J 7/042;
C08J 7/043; C08L 79/08; C09D 163/00;**
C08G 59/3281; C08J 2379/08; C08J 2433/14;
C08J 2463/00; C08K 2003/2227; C08K 2003/2241;
(Cont.)

(86) International application number:
**PCT/KR2021/007679**

(87) International publication number:
**WO 2021/261848 (30.12.2021 Gazette 2021/52)**

(54) **MULTI-STRUCTURED FILM HAVING IMPROVED INTERFERENCE FRINGE, AND DISPLAY DEVICE COMPRISING SAME**

MULTISTRUKTURIERTE FOLIE MIT VERBESSERTEM INTERFERENZSTREIFEN UND ANZEIGEVORRICHTUNG DAMIT

FILM MULTI-STRUCTURÉ PRÉSENTANT UNE FRANGE D'INTERFÉRENCE AMÉLIORÉE, ET DISPOSITIF D'AFFICHAGE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2020 KR 20200076134**

(43) Date of publication of application:
**26.04.2023 Bulletin 2023/17**

(73) Proprietor: **Kolon Industries, Inc.**
**Seoul 07793 (KR)**

(72) Inventor: **AN, Byung-Joon**
**Seoul 07793 (KR)**

(74) Representative: **Ter Meer Steinmeister & Partner**
**Patentanwälte mbB**
**Nymphenburger Straße 4**
**80335 München (DE)**

(56) References cited:
**EP-A1- 3 447 544**    **WO-A1-2018/180304**
**JP-A- 2018 180 274**    **JP-A- 2019 124 908**
**JP-A- 2019 124 908**    **KR-A- 20100 007 441**
**KR-A- 20180 126 951**    **KR-A- 20190 063 306**
**KR-B1- 102 032 316**    **US-A1- 2020 061 981**
**US-B2- 8 692 959**

(52) Cooperative Patent Classification (CPC): (Cont.)
C08K 2003/2244; G02F 1/133502

C-Sets
**C08K 3/22, C08L 33/00;**
**C08K 3/22, C08L 63/00;**
**C08K 3/22, C08L 75/04;**

**C08K 3/22, C08L 83/04;**
**C08K 3/36, C08L 33/00;**
**C08K 3/36, C08L 63/00;**
**C08K 3/36, C08L 75/04;**
**C08K 3/36, C08L 83/04;**
**C09D 163/00, C08K 3/20**

**Description**

[Technical Field]

The present disclosure relates to a film used for a display device, and a display device including the same.

[Background Art]

Polymer resins having excellent insolubility, chemical resistance, heat resistance, radiation resistance, and low-temperature characteristics are used as automobile materials, aviation materials, spacecraft materials, insulating coatings, insulating films, and protective films.

Recently, the use of a polymer film formed of a polymer resin instead of glass as a cover window of a display device has been considered with the goal of reducing the thickness and weight and increasing the flexibility of the display device. In order for the polymer film to be used as the cover window of the display device, the polymer film needs to have excellent physical properties such as hardness, abrasion resistance, and flexibility. In order to impart desired physical properties to the display device, a coating layer is formed on a substrate.

However, optical interference occurs in the film including the coating layer formed on the substrate due to the difference in optical properties between the coating layer and the substrate. As a result, interference fringes like rainbow light are generated on the surface of the film, and thus there is a problem in that the visibility of the film is deteriorated. The following documents represent prior art wit respect to polymer films as disclosed herein:

(1) EP 3 447 544 A1
(2) JP 2018 180274 A
(3) WO 2018/180304 A1
(4) US 8 692 959 B2
(5) JP 2019 124908 A

[Disclosure]

[Technical Problem]

Therefore, the present disclosure has been made in view of the above problems, and it is one object of the present disclosure to provide a film having a reflectance oscillation ratio ($O_r$) of 1.0 or less.

It is another object of the present disclosure to provide a film having a reflectance graph slope ($G_r$) of 0.122 or less.

[Technical Solution]

In accordance with the present disclosure, the above and other objects can be accomplished by the provision of a film used for a display device as defined in the appended claims.

In accordance with another aspect of the present disclosure, there is provided a display device including a display panel and the film disposed on the display panel.

[Advantageous Effects]

In general, unlike glass, a polymer film includes a coating layer on a substrate so as to improve physical properties such as hardness, abrasion resistance and flexibility, but an interference fringe may occur in the film including the substrate and the coating layer due to differences in optical properties between the substrate and the coating layer.

According to an embodiment of the present disclosure, a film that prevents the formation of interference fringe and improves visibility can be manufactured by adjusting the reflectance oscillation ratio $O_r$ of the film to 1.0 or less and the reflectance graph slope $G_r$ of the film to 0.122 or less.

In addition, the film according to the embodiment of the present disclosure has excellent optical and mechanical properties and thus effectively protects a display surface of a display device when used as a cover window of the display device.

[Description of Drawings]

The above and other objects, features and other advantages of the present disclosure will be more clearly understood from the following detailed description taken in conjunction with the accompanying drawings, in which:

FIG. 1 is a schematic diagram showing a film 100 according to an embodiment of the present disclosure.

FIG. 2 is a reflectance graph of a film obtained by measuring the light reflectance of the film in a wavelength range of 380 to 780 nm using a UH4150 apparatus from Hitachi, Ltd.

FIG. 3 is an enlarged reflectance graph of the film in an arbitrary wavelength range $W_x$.

FIG. 4 shows the slope in the wavelength range of 500 nm to 780 nm in the reflectance graph of the film.

FIG. 5 is an enlarged view showing a first coating layer 20 according to an embodiment of the present disclosure.

FIG. 6 is a schematic diagram showing a film 101 further including a swelling layer 12 according to another embodiment of the present disclosure.

FIG. 7 is a schematic diagram showing a film 102 further including a second coating layer 30 according to the present disclosure.

FIG. 8 is a schematic diagram showing another configuration of the film 102 further including the second coating layer 30 according to the present disclosure.

FIG. 9 is a schematic diagram showing a film 103 further including a third coating layer 40 according to the present disclosure.

[Best Mode]

Hereinafter, preferred embodiments of the present disclosure will be described in more detail with reference to the attached drawings. These embodiments are provided for illustration so that this disclosure will be thorough and complete, and should not be construed as limiting the scope of the present disclosure.

The shapes, sizes, ratios, angles, numbers, etc. disclosed in the drawings for describing the embodiments of the present disclosure are exemplary, and thus the present disclosure is not limited to the items shown in the drawings. Like reference numbers refer to like elements throughout the description of the figures. Detailed descriptions of the related well-known art may be omitted when these may unnecessarily make the subject matter of the present disclosure unclear.

When the terms "include", "have", and "consist of", etc. mentioned herein are used, another element may be added, unless the expression "only" is used. Singular forms are intended to include plural forms as well, unless the context clearly indicates otherwise. In addition, constituent elements are to be interpreted as including error ranges even if there is no explicit description thereof.

In the description of positional relationships, for example, when a positional relationship between two elements is described using "on", "upper", "lower", and "next to", at least one other element may be present between the two elements, unless the term "immediately" or "directly" is used.

Spatially relative terms such as "below", "beneath", "lower", "above", or "upper" may be used herein to describe a relationship of a device or an element to another device or another element as shown in the figures. It will be understood that spatially relative terms are intended to encompass different orientations of a device during the use or operation of the device, in addition to the orientation depicted in the figures. For example, if a device in one of the figures is turned upside down, elements described as "below" or "beneath" other elements would then be oriented "above" the other elements. The exemplary term "below" or "beneath" can, therefore, encompass both an orientation of below and above. In the same manner, the exemplary term "above" or "upper" can encompass both an orientation of above and below.

In describing a temporal relationship, for example, when the temporal order is described as "after", "subsequent", "next", and "before", the case which is not continuous may be included, unless "just" or "directly" is used.

It will be understood that, although the terms "first", "second", etc. may be used herein to describe various elements, these elements should not be limited by these terms. These terms are used only to distinguish one element from another. Therefore, a first element described below could be termed a second element within a technical idea of the present disclosure.

It should be understood that the term "at least one" includes all combinations related with any one item. For example, "at least one among a first element, a second element, and a third element" may include all combinations of two or more elements selected from among the first, second, and third elements as well as each element of the first, second, and third elements.

Features of various embodiments of the present disclosure may be partially or completely coupled to or combined with each other, and may be variously inter-operated with each other and driven technically as will be easily understood by those skilled in the art. The embodiments of the present disclosure may be carried out independently from each other, or may be carried out together in an interrelated manner.

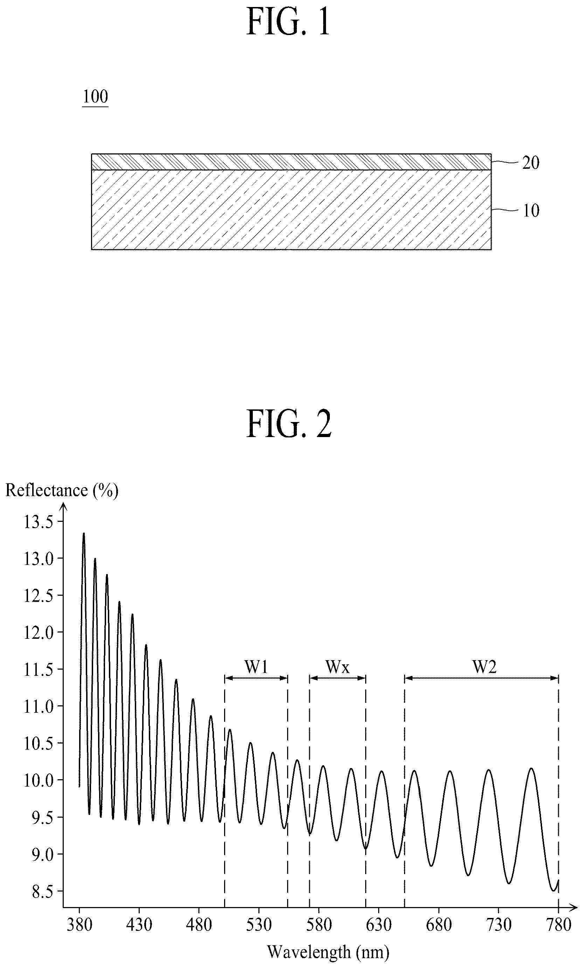

FIG. 1 is a schematic diagram showing a film 100 according to an embodiment of the present disclosure.

As shown in FIG. 1, the film 100 according to the embodiment of the present disclosure includes a substrate 10 and a first coating layer 20.

In one aspect, the film has a reflectance oscillation ratio $O_r$, calculated using the following Equation 1, of 1.0 or less, and a reflectance graph slope $G_r$, calculated using the following Equation 2, of 0.122 or less, based on a reflectance graph obtained by measuring the reflectance in a wavelength region of 380 nm to 780 nm:

<Equation 1>

$$O_r = [(O_{m1} * O_{m2}) - (O_{m1} + O_{m2})]/Min(O_{m1}, O_{m2})$$

<Equation 2>

$$G_r = |(R_{m1} - R_{m2})|/R_{m2}$$

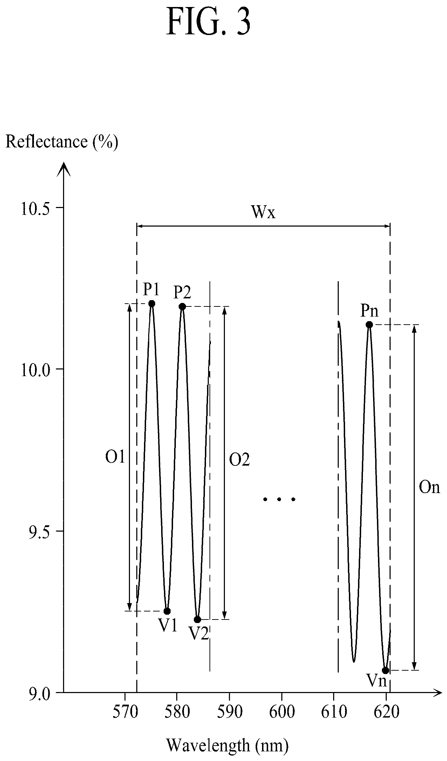

Hereinafter, the reflectance oscillation ratio $O_r$ of the film will be described with reference to FIGS. 2 and 3. In the present disclosure, oscillation is also referred to as "amplitude".

FIG. 2 is a reflectance graph of a film obtained by measuring the light reflectance of the film in a wavelength range of 380 to 780 nm using a UH4150 apparatus from Hitachi, Ltd. The graph of FIG. 2 is provided only as an example, and the shape and the resulting value of the graph may vary depending on each film, and thus the present disclosure is not limited thereto.

FIG. 3 is an enlarged reflectance graph of the film in an arbitrary wavelength region $W_x$.

The reflectance oscillation ratio $O_r$ of the film may be calculated in accordance with Equation 1 above from the reflectance graph of the film of FIG. 2.

In Equation 1, $O_{m1}$ is the mean $O_m$ of reflectance oscillation values in a wavelength range of 500 nm to 550 nm, $Om_2$ is the mean $O_m$ of reflectance oscillation values in a wavelength range of 650 nm to 780 nm, and $Min(O_{m1}, O_{m2})$ is a smaller mean $O_m$ of the means $O_{m1}$ and $O_{m2}$ of reflectance oscillation values.

The means of the reflectance oscillation values $O_{m1}$ and $O_{m2}$ are calculated using the following Equation 3:

<Equation 3>

$$O_m = (1/n) * \sum(O_k)$$

wherein $O_k$ is an oscillation value in the corresponding wavelength range and n is the number of oscillation values in the corresponding wavelength range.

Hereinafter, a method of calculating the means $O_{m1}$ and $O_{m2}$ of the reflectance oscillation values in accordance with Equation 3 will be described in more detail with reference to FIGS. 2 and 3.

In the graph of FIG. 2, the extent of reflection of light from the film at each wavelength of light is expressed as a percentage (%). As shown in FIG. 2, optical interference occurs in the film including the coating layer due to the difference in optical properties between the substrate and the coating layer. Thus, the amplitude (oscillation) at which the peaks and valleys of the reflectance irregularly repeat occurs. The amplitude of the reflectance depending on the wavelength causes an interference fringe on the surface of the film.

As shown in FIG. 3, as the wavelength increases in the reflectance graph of the film of the arbitrary wavelength range ($W_x$), the peaks ($P_k = P_1, P_2, P_3, ..., P_n$) and valleys ($V_k = V_1, V_2, V_3, ..., V_n$) appear repeatedly. In this case, a pair of a peak ($P_k$) and a valley ($V_k$) adjacent to each other constitutes one oscillation, and the difference in reflectance values corresponding to a pair of a peak $P_k$ and a valley $V_k$ adjacent to each other (|the reflectance corresponding to $P_k$ - the reflectance corresponding to $V_k$|) constitutes one oscillation value. By applying the calculated n oscillation values ($O_k = O_1, O_2, O_3, ..., O_n$) to Equation 3 above, the mean $O_m$ of the reflectance oscillation values can be calculated.

The reflectance oscillation ratio $O_r$ can be calculated using Equation 1 above using the mean $O_{m1}$ of the reflectance oscillation values calculated using Equation 3 in the wavelength range of 500 nm to 550 nm $W_1$, and the mean $O_{m2}$ of the reflectance oscillation values calculated using Equation 3 in the wavelength range of 650 nm to 780 nm $W_2$.

According to an embodiment of the present disclosure, the reflectance oscillation ratio $O_r$ is 1.0 or less.

The reflectance oscillation ratio $O_r$ of the present disclosure refers to the extent of change of the reflectance of the film caused by optical interference upon the change of the wavelength, and as the reflectance oscillation ratio $O_r$ increases, the optical interference increases, and as the reflectance oscillation ratio $O_r$ decreases, optical interference decreases.

When the reflectance oscillation ratio $O_r$ is 1.0 or less, the extent of change in reflectance according to the change in wavelength is reduced, the reflected light appears uniform to the human eye and an interference fringe is not observed thereby. On the other hand, when the reflectance oscillation ratio $O_r$ is higher than 1.0, the extent of change in reflectance according to the change in wavelength increases, the reflected light appears non-uniform to the human eye, and an interference fringe with various colors formed at narrow intervals can be produced on the surface of the film.

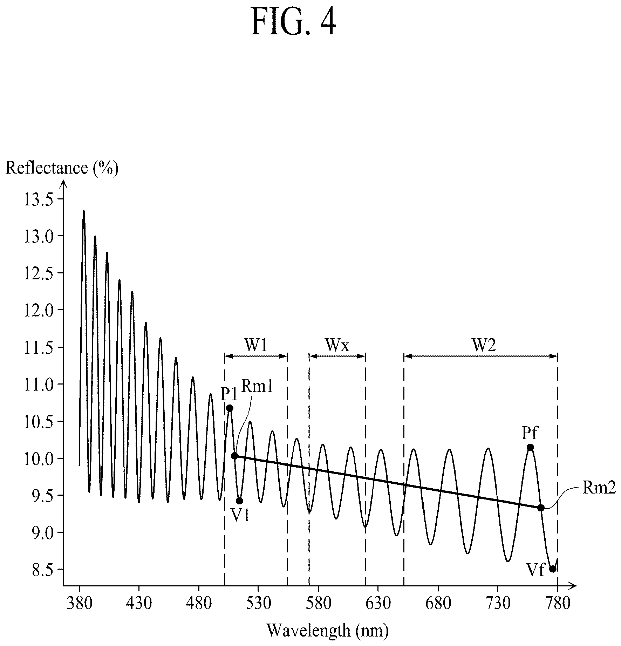

Hereinafter, the reflectance graph slope $G_r$ will be described with reference to FIG. 4.

FIG. 4 shows the slope of the graph in the wavelength range of 500 nm to 780 nm in the reflectance graph of the film. The graph of FIG. 4 is provided only as an example, and the shape and the resulting value of the graph may vary depending on each film, and thus the present disclosure is not limited thereto.

The reflectance graph slope $G_r$ of the film may be calculated in accordance with Equation 2 above from the reflectance graph of the film of FIG. 4.

In Equation 2, $R_{m1}$ is the arithmetic mean of the reflectance value corresponding to a first peak $P_1$ and the reflectance value corresponding to a first valley $V_1$ in the reflectance graph in the wavelength range of 500 nm to 780 nm, and $R_{m2}$ is the arithmetic mean of the reflectance value corresponding to a final peak $P_f$ and the reflectance value corresponding to a final valley $V_f$ in the reflectance graph in the wavelength range of 500 nm to 780 nm.

As shown in FIG. 4, regarding the reflectance of the film including the coating layer, the amplitude becomes irregular as the wavelength increases. Therefore, the slope at any specific point of the reflectance graph can be measured, but it is difficult to measure the slope throughout the entire wavelength range of 500 nm to 780 nm.

Therefore, in an embodiment of the present disclosure, the reflectance graph slope $G_r$ that can be used to determine the slope behavior throughout the entire wavelength range of 500 nm to 780 nm can be calculated in accordance with Equation 2 above by obtaining the mean $R_{m1}$ of the reflectance corresponding to the first peak $P_1$ and the reflectance corresponding to the first valley $V_1$ in the wavelength region from the reflectance graph and the mean $R_{m2}$ of the reflectance corresponding to the final peak $P_f$ and the reflectance corresponding to the final valley $V_f$.

According to an embodiment of the present disclosure, the reflectance graph slope $G_r$ is 0.122 or less.

The reflectance graph slope $G_r$ of the present disclosure means the extent of increase or decrease in the reflectance of the film according to wavelength, and when the reflectance rapidly increases or decreases according to a change in the wavelength, the reflectance graph slope $G_r$ increases. As the reflectance graph slope $G_r$ increases, the reflected light appears non-uniform to the human eye, so an interference fringe of various colors appears over a wide area. On the other hand, as the reflectance graph slope $G_r$ decreases, the reflected light appears uniform to the human eye.

When the reflectance graph slope $G_r$ is 0.122 or less, optical interference is reduced and no interference fringe is generated. On the other hand, when the reflectance graph slope $G_r$ is higher than 0.122, optical interference may increase and an interference fringe may be produced on the surface of the film.

According to an embodiment of the present disclosure, the substrate 10 includes a transparent polymer. Any transparent polymer may be used as the substrate 10 according to an embodiment of the present disclosure, without any particular limitation. Examples of the polymer include homopolymers, such as polyimide-based polymer, polyester-based polymer, polyolefin-based polymer, norbornene-based polymer, polycarbonate-based polymer, polyethersulfone-based polymer, polyarylate-based polymer, polyacrylic-based polymer, polyethylene terephthalate-based polymer and cellulose-based polymers, copolymers thereof, and epoxy-based polymers thereof.

In particular, the polyimide-based polymer has excellent physical properties, such as thermal properties, hardness, abrasion resistance, and flexibility, as well as optical properties, such as light transmittance and haze, and thus is preferably used as a substrate for a film used as a cover window of a display device, but the present disclosure is not limited thereto. In the present disclosure, the polyimide-based polymer refers to a polymer including a repeating unit having an imide functional group in a main chain structure, and is generally formed through condensation between an amine and carboxylic anhydride. In addition, the polyimide-based polymer may include an amide repeating unit. For example, the polyimide-based polymer according to an embodiment of the present disclosure is a polyamide-imide polymer.

The type of the film 100 may vary depending on the polymer of the substrate 10. For example, the film 100 including the substrate 10 containing a polyimide-based polymer may be referred to as a "polyimide-based film".

According to an embodiment of the present disclosure, the polymer is optically anisotropic, and thus the substrate 10 is birefringent.

The substrate 10 has an X-axis direction refractive index $N_x$ of 1.57 to 1.67, a Y-axis direction refractive index $N_y$ of 1.57 to 1.67, and a Z-axis direction refractive index $N_z$ of 1.53 to 1.57.

In the present disclosure, the Z-axis direction of the substrate refers to a height direction of the substrate, and the X-axis direction and the Y-axis direction of the substrate are determined according to the refractive indices in the horizontal and vertical directions. In the present disclosure, among the refractive index in the horizontal direction and the refractive index in the vertical direction, the direction of the larger value of the refractive index is the X-axis direction, and the direction of the smaller value of the refractive index is the Y-axis direction.

Therefore, the refractive index in the X-axis direction $N_x$ of the substrate refers to the larger refractive index among the refractive index in the horizontal direction and the refractive index in the vertical direction of the substrate, the refractive index in the Y-axis direction $N_y$ of the substrate refers to the smaller refractive index among the refractive index in the horizontal direction and the refractive index in the vertical direction of the substrate, and the refractive index in the Z-axis direction of the substrate $N_z$ refers to the refractive index in the height direction of the substrate.

When the refractive index in each direction of the substrate does not fall within the above range, an interference fringe may be generated due to the difference in refractive index between the substrate and the coating layer.

According to an embodiment of the present disclosure, the substrate 10 may have a thickness of 100 $\mu$m or less.

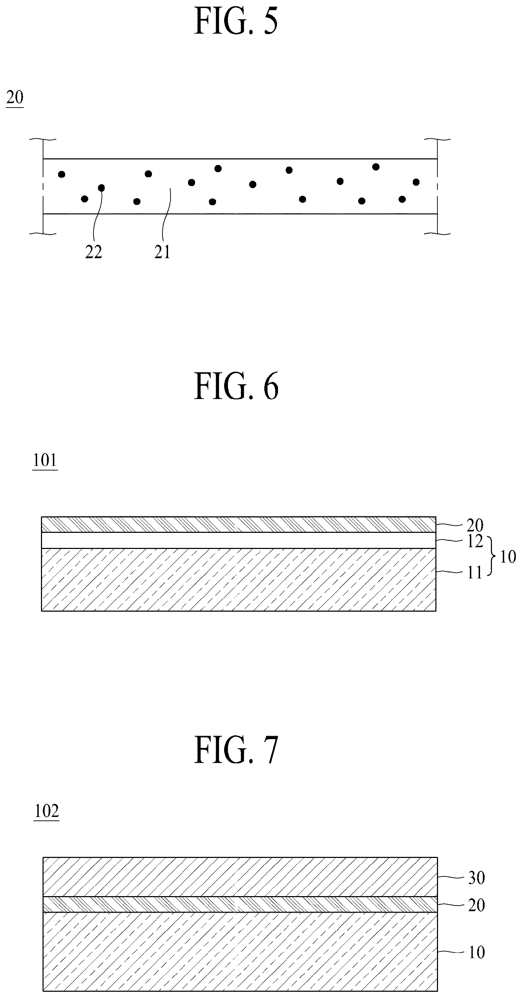

Hereinafter, the first coating layer 20 of the present disclosure will be described in detail with reference to FIG. 5.

FIG. 5 is an enlarged view showing the first coating layer 20 according to an embodiment of the present disclosure.

The first coating layer 20 is disposed on the substrate 10, and serves to control the reflectance oscillation ratio $O_r$ and the reflectance graph slope $G_r$ of the film.

According to an embodiment of the present disclosure, the first coating layer 20 may include a light-transmissive matrix 21 and particles 22 dispersed in the light-transmissive matrix 21.

The first coating layer 20 including the light-transmissive matrix 21 and particles 22 dispersed in the light-transmissive matrix 21 is shown in FIG. 5.

The particles 22 dispersed in the light-transmissive matrix of the first coating layer 20 control the reflectance oscillation ratio $O_r$ of the film and the reflectance graph slope $G_r$ of the film, and thereby control the refractive index of the first coating layer 20.

According to an embodiment of the present disclosure, the light-transmissive matrix 21 of the first coating layer 20 may include at least one of a siloxane-based resin, an acrylic-based resin, a urethane-based resin, or an epoxy-based resin.

In an embodiment of the present disclosure, the particles include at least one of zirconia ($ZrO_2$), silica ($SiO_2$), alumina ($Al_2O_3$), titanium dioxide ($TiO_2$), styrene, or acryl. In particular, zirconia is advantageous in preventing the generation of an interference fringe by controlling the refractive index of the first coating layer and controlling the reflectance oscillation ratio $O_r$ of the film and the reflectance graph slope $G_r$ of the film.

The first coating layer 20 may be formed using a first coating composition. The first coating composition may include at least one of a siloxane-based resin, an acrylic-based resin, a urethane-based resin, or an epoxy-based resin. The first coating composition may include particles. The first coating composition may include a solvent.

In order to produce a film 100 having a reflectance oscillation ratio $O_r$ of 1.0 or less, the type of the light-transmissive matrix 21 of the first coating layer 20, the type of particles 22 included in the first coating layer 20, the content of particles 22 included in the first coating layer 20, the refractive index of the first coating layer 20, the thickness of the first coating layer 20, and the "solvent of the first coating composition" for the formation of the first coating layer 20 may be controlled.

According to an embodiment of the present disclosure, the type of the light-transmissive matrix 21 of the first coating layer 20 may be controlled in order to produce a film 100 having a reflectance oscillation ratio $O_r$ of 1.0 or less and a reflectance graph slope $G_r$ of 0.122 or less.

The light-transmissive matrix 21 of the first coating layer 20 may include at least one of a siloxane-based resin, an acrylic-based resin, a urethane-based resin, or an epoxy-based resin.

Depending on the type of the light-transmissive matrix 21 of the first coating layer 20, the refractive index of the first coating layer 20 may vary, and the reflectance oscillation ratio $O_r$ and the reflectance graph slope $G_r$ may be controlled.

According to an embodiment of the present disclosure, the particles 22 included in the first coating layer 20 may be controlled in order to produce a film 100 having a reflectance oscillation ratio $O_r$ of 1.0 or less and a reflectance graph slope $G_r$ of 0.122 or less.

The particles 22 may include at least one of zirconia, silica, alumina, titanium dioxide, styrene, or acryl. Preferably, the particles 22 may include zirconia.

The particles 22 in the first coating layer 20 can control the refractive index of the first coating layer 20, thereby adjusting the reflectance oscillation ratio $O_r$ of the film to 1.0 or less, and the reflectance graph slope $G_r$ of the film to 0.122 or less. In particular, the use of zirconia makes it easy to control the refractive index of the first coating layer 20.

According to an embodiment of the present disclosure, the content of the particles 22 included in the first coating layer 20 may be controlled in order to produce a film 100 having a reflectance oscillation ratio $O_r$ of 1.0 or less and a reflectance graph slope $G_r$ of 0.122 or less.

According to an embodiment of the present disclosure, the particles 22 are present in the first coating layer 20 in an amount of 10 to 50 parts by weight, based on 100 parts by weight of the light-transmissive matrix 21.

When the particles 22 are present in the first coating layer 20 in an amount of less than 10 parts by weight or more than 50 parts by weight based on 100 parts by weight of the light-transmissive matrix 21, the reflectance oscillation ratio $O_r$ of the film is higher than 1, or the reflectance graph slope $G_r$ of the film is higher than 0.122.

According to an the present disclosure, the first coating layer 20 has a refractive index $N_1$ determined using Equation 4 below in consideration of the X-axis and Y-axis refractive indices of the substrate.

$$<\text{Equation 4}>$$

$$0.927*N_x \le N_1 \le 0.978*N_y$$

When the refractive index $N_1$ of the first coating layer 20 does not fall within the above range, the reflectance oscillation ratio $O_r$ of the film 100 is higher than 1, or the reflectance graph slope $G_r$ of the film 100 is higher than 0.122.

Therefore, in order to adjust the reflectance oscillation ratio $O_r$ of the film 100 to 1.0 or less and the reflectance

graph slope $G_r$ to 0.122 or less, the refractive index of the first coating layer 20 can be controlled within the range of Equation 4 above.

According to an the present disclosure, the first coating layer 20 has a thickness of 0.01 to 3.4 $\mu$m, preferably a thickness of 0.07 to 1.3 $\mu$m in order to produce a film 100 having a reflectance oscillation ratio $O_r$ of 1.0 or less and a reflectance graph slope $G_r$ of 0.122 or less.

By controlling the thickness of the first coating layer 20 within the range of 0.01 to 3.4 $\mu$m, a film 100 having a reflectance oscillation ratio $O_r$ of 1.0 or less and a reflectance graph slope $G_r$ of 0.122 or less can be produced.

When the thickness of the first coating layer 20 is less than 0.01 $\mu$m, coating stability and the thickness of the swelling layer 12 are reduced, so the effect of controlling the reflectance oscillation ratio $O_r$ is insufficient. In addition, when the thickness of the first coating layer 20 is higher than 3.4 $\mu$m, the reflectance oscillation ratio $O_r$ is higher than 1.0.

According to an embodiment of the present disclosure, by controlling the solvent of the first coating composition for forming the first coating layer 20, a film having a reflectance oscillation ratio $O_r$ of 1.0 or less and a reflectance graph slope $G_r$ of 0.122 or less can be produced.

Specifically, the solvent of the first coating composition may include at least one of methyl ethyl ketone (MEK), methyl isobutyl ketone (MIBK), propylene glycol methyl ether (PGME), or ethyl acetate (EA). In particular, the solvent preferably includes MEK.

According to an embodiment of the present disclosure, the solvent of the first coating composition may include MEK, along with at least one of MIBK, PGME, or EA.

According to an embodiment of the present disclosure, a mass ratio of MEK to at least one of MIBK, PGME, or EA in the solvent of the first coating composition may be 8:2 to 6:4.

A swelling layer may be formed by the solvent of the first coating composition.

According to another embodiment of the present disclosure, the film 101 may further include the swelling layer 12.

The swelling layer 12 may be disposed between the residual substrate layer 11 and the first coating layer 20.

FIG. 6 is a schematic diagram showing the film 101 further including the swelling layer 12 according to another embodiment of the present disclosure.

Hereinafter, the swelling layer 12 will be described with reference to FIG. 6.

The swelling layer 12 may be formed by the solvent of the first coating composition.

As shown in FIG. 6, the swelling layer 12 is a layer disposed between the residual substrate layer 11 and the first coating layer 20, and the solvent contained in the first coating composition may swell the substrate 10 of the film 101 in the process of forming the first coating layer 20 on the substrate using the first coating composition. Accordingly, the swelling layer 12 may be formed on the substrate 10. In this case, the portion of the substrate 10 that is not swollen is referred to as the "residual substrate layer 11".

According to an embodiment of the present disclosure, the substrate 10 may include the residual substrate layer 11 and the swelling layer 12.

By disposing the swelling layer 12 between the residual substrate layer 11 and the first coating layer 20, the reflectance oscillation ratio $O_r$ of the film 101 may be set to 1.0 or less, and the reflectance graph slope $G_r$ thereof may be set to 0.122 or less.

The swelling layer 12 may have a refractive index of 1.66 or less.

In order to adjust the reflectance oscillation ratio $O_r$ and the reflectance graph slope $G_r$ of the film 101 to 1.0 or less and 0.122 or less, respectively, the refractive index of the swelling layer 12 may be controlled to 1.66 or less.

When the refractive index of the swelling layer 12 is greater than 1.66, disadvantageously, the reflectance oscillation ratio $O_r$ is greater than 1.0, and an interference fringe is observed on the surface of the film 101.

The swelling layer 12 may have a thickness of 10 to 50% of the thickness of the first coating layer 20.

In order to adjust the reflectance oscillation ratio $O_r$ and the reflectance graph slope $G_r$ of the film 101 to 1.0 or less and 0.122 or less, respectively, the thickness of the swelling layer 12 can be controlled within the range of 10 to 50% of the thickness of the first coating layer 20.

When the thickness of the swelling layer 12 is less than 10% of the thickness of the first coating layer 20, the adhesion between the substrate 10 and the first coating layer 20 may be deteriorated. On the other hand, when the thickness of the swelling layer 12 is higher than 50%, the flexibility of the film 101 may be reduced.

The thickness of the swelling layer 12 may vary depending on the type, content, and content ratio of the "solvent of the first coating composition", as well as the drying time and temperature of the first coating layer 20.

In order to adjust the thickness of the swelling layer 12 to 10 to 50% of the thickness of the first coating layer 20, the solvent of the first coating composition includes MEK, along with at least one of MIBK, PGME, or EA.

In order to adjust the thickness of the swelling layer 12 to 10 to 50% of the thickness of the first coating layer 20, the MEK and at least one of MIBK, PGME, or EA of the solvent of the first coating composition may be mixed at a weight ratio of 8:2 to 6:4.

In order to adjust the thickness of the swelling layer 12 to 10 to 50% of the thickness of the first coating layer 20, the thickness of the first coating layer 20 may be adjusted to 0.01 to 3.4 $\mu$m.

When the thickness of the first coating layer 20 is less than 0.01 $\mu$m, the coating stability is deteriorated and the thickness of the swelling layer 12 is reduced, so the effect of controlling the reflectance oscillation ratio $O_r$ is insufficient. In addition, when the thickness of the first coating layer 20 is higher than 3.4 $\mu$m, the reflectance oscillation ratio $O_r$ is higher than 1.0, an interference fringe is generated, and the visibility of the film may be deteriorated.

In order to adjust the thickness of the swelling layer 12 to 10 to 50% of the thickness of the first coating layer 20, gradation drying may be performed in a stepwise manner including drying at 50 to 60°C for 1 to 2 minutes, at 70 to 80°C for 2 to 3 minutes, and at 90 to 100°C for 2 to 3 minutes in the process of preparing the first coating layer 20.

When the temperature in each step is higher than the upper limit in the process of producing the first coating layer 20, problems in which the solvent is rapidly volatilized and the swelling layer 12 is not sufficiently formed may occur, and when the temperature in each step is less than the lower limit, a problem in which the thickness of the swelling layer 12 is greater than the range defined in the present disclosure may occur.

When the drying time of the first coating layer 20 is longer than the upper limit in each step, a problem in which the thickness of the swelling layer 12 is greater than the range defined in the present disclosure may occur, and when the time is shorter than the lower limit in each step, a problem in which the swelling layer 12 is not sufficiently formed may occur.

The production method may be controlled in order to produce a film 100 having a reflectance oscillation ratio $O_r$ of 1.0 or less and a reflectance graph slope $G_r$ of 0.122 or less. For example, in order to produce a film 100 having a reflectance oscillation ratio $O_r$ of 1.0 or less and a reflectance graph slope $G_r$ of 0.122 or less, a drying method may be controlled during the process of producing the first coating layer 20.

For example, when preparing the first coating layer 20, gradation drying may be performed in a stepwise manner at 50 to 60°C for 1 to 2 minutes, at 70 to 80°C for 2 to 3 minutes, and then at 90 to 100°C for 2 to 3 minutes.

As such, by adjusting the components, refractive index, thickness, and production method of the first coating layer 20, the reflectance oscillation ratio $O_r$ and the reflectance graph slope $G_r$ of the film can be controlled and the refractive index of the first coating layer can be controlled.

According to the present disclosure, the film 102 further includes a second coating layer 30 on the substrate 10.

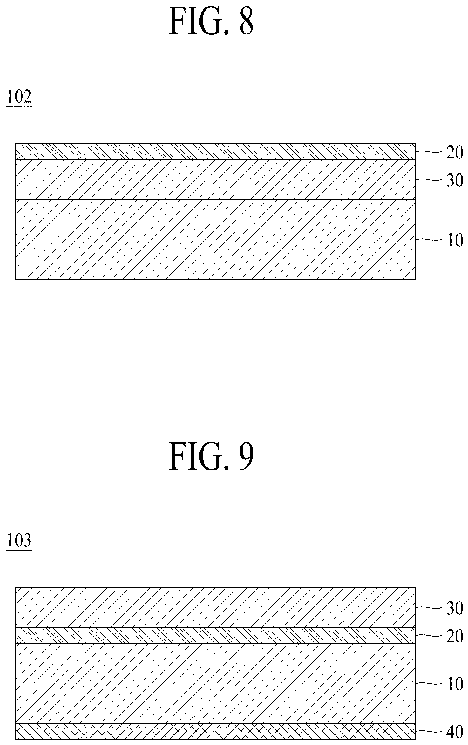

FIGS. 7 and 8 are schematic views showing the film 102 further including the second coating layer 30 according to the present disclosure.

As shown in FIG. 7, the second coating layer 30 may be disposed between the substrate 10 and the first coating layer 20.

As shown in FIG. 8, the first coating layer 20 may be disposed between the substrate 10 and the second coating layer 30.

The reflectance oscillation ratio $O_r$ and the reflectance graph slope $G_r$ of the film 102 may also be controlled using the second coating layer 30.

The second coating layer 30 is a layer that protects the substrate 10 or the first coating layer 20 and the adherend to which the film 102 is attached from the external environment, and the second coating layer 30 may be a hard coating layer.

According to the present disclosure, the second coating layer 30 has a refractive index $N_2$ determined according to Equation 5 below, based on the X-axis and Y-axis refractive indices of the substrate.

$$<\text{Equation 5}>$$

$$0.793*N_x \leq N_2 \leq 0.975*N_y$$

When the refractive index $N_2$ of the second coating layer 30 does not fall within the above range, the reflectance oscillation ratio $O_r$ of the film is higher than 1, or the reflectance graph slope $G_r$ of the film is higher than 0.122.

According to another embodiment of the present disclosure, the second coating layer 30 may include a light-transmissive matrix.

The light-transmissive matrix of the second coating layer 30 may include at least one of a siloxane-based resin, an acrylic-based resin, a urethane-based resin, or an epoxy-based resin. The light-transmissive matrix of the second coating layer 30 may be the same as or different from the light-transmissive matrix of the first coating layer 20, but the present disclosure is not limited thereto. However, it is preferable that the same light-transmissive matrix is used because adhesion between the first and second coating layers increases.

According to the present disclosure, the second coating layer 30 has a thickness of 1 to 14 $\mu$m, preferably a thickness of 3 to 7 $\mu$m, but the present disclosure is not limited thereto.

By controlling the thickness of the second coating layer 30, the reflectance oscillation ratio $O_r$ of the film 102 and the reflectance graph slope $G_r$ of the film can be controlled and the refractive index of the second coating layer 30 can be controlled.

The second coating layer 30 may be formed using the second coating composition. The second coating composition may include at least one of a siloxane-based resin, an acrylic-based resin, a urethane-based resin, or an epoxy-based resin. The second coating composition may include a solvent.

According to the present disclosure, a film 103 further includes a third coating layer 40 on the substrate 10.

FIG. 9 is a schematic diagram showing the film 103 further including the third coating layer 40 according to the present disclosure.

According to the present disclosure, the third coating layer 40 has a refractive index $N_3$ satisfying the following Equation 6 based on the X-axis and Y-axis refractive indices of the substrate.

$$<\text{Equation 6}>$$

$$0.793 * N_x \leq N_3 \leq 0.975 * N_y$$

When the refractive index $N_3$ of the third coating layer 40 does not fall within the above range, the reflectance oscillation ratio $O_r$ of the film is higher than 1, or the reflectance graph slope $G_r$ of the film is higher than 0.122.

According to another embodiment of the present disclosure, the third coating layer 40 may include a light-transmissive matrix.

The light-transmissive matrix of the third coating layer 40 may include at least one of a siloxane-based resin, an acrylic-based resin, a urethane-based resin, or an epoxy-based resin. The light-transmissive matrix of the third coating layer 40 may be the same as or different from the light-transmissive matrix of the first coating layer 20 or the second coating layer 30, but the present disclosure is not limited thereto.

According to the present disclosure, the third coating layer 40 has a thickness of 1 $\mu$m or less, preferably a thickness of 0.1 $\mu$m or less, but the present disclosure is not limited thereto.

By controlling the thickness of the third coating layer 40, the reflectance oscillation ratio $O_r$ of the film 102 and the reflectance graph slope $G_r$ of the film can be controlled, and the refractive index of the second coating layer 30 can be controlled.

The third coating layer 40 may be formed using the third coating composition. The third coating composition may include at least one of a siloxane-based resin, an acrylic-based resin, a urethane-based resin, or an epoxy-based resin. The third coating composition may include a solvent.

In another aspect, the present disclosure is directed to a display device including a display panel and the film disposed on the display panel. The film of the display device may include the film according to one embodiment of the present disclosure.

The display panel includes a substrate, a thin film transistor (TFT) on the substrate, and an organic light-emitting device connected to the thin film transistor (TFT). The organic light-emitting device includes a first electrode, an organic light-emitting layer on the first electrode, and a second electrode on the organic light-emitting layer. The display device may be an organic light-emitting display device.

The substrate may be made of glass or plastic. Specifically, the substrate may be made of a plastic such as a polyimide-based resin or a polyimide-based film. A buffer layer may be disposed on the substrate.

A thin film transistor (TFT) is disposed on the substrate. The thin film transistor (TFT) includes a semiconductor layer, a gate electrode insulated from the semiconductor layer and overlapping at least a portion of the semiconductor layer, a source electrode connected to the semiconductor layer, and a drain electrode spaced apart from the source electrode and connected to the semiconductor layer.

A gate insulating film is disposed between the gate electrode and the semiconductor layer. An interlayer insulating layer may be disposed on the gate electrode, and the source electrode and the drain electrode may be disposed on the interlayer insulating layer.

A planarization layer is disposed on the thin film transistor TFT to planarize the top of the thin film transistor TFT.

The first electrode is disposed on the planarization layer. The first electrode is connected to the thin film transistor TFT through a contact hole provided in the planarization layer.

The bank layer is disposed in a portion of the first electrode on the planarization layer to define a pixel area or a light-emitting area. For example, the bank layer is disposed in the form of a matrix in the corresponding boundaries between a plurality of pixels to define the respective pixel regions.

The organic light-emitting layer is disposed on the first electrode. The organic light-emitting layer may also be disposed on the bank layer. The organic light-emitting layer may include one light-emitting layer or two light-emitting layers stacked in a vertical direction. Light having any one color of red, green, and blue may be emitted from the organic light-emitting layer, and white light may be emitted therefrom.

The second electrode is disposed on the organic light-emitting layer.

The first electrode, the organic light-emitting layer, and the second electrode may be stacked to constitute the organic light-emitting device.

When the organic light-emitting layer emits white light, each pixel may include a color filter for filtering the white light emitted from the organic light-emitting layer based on respective wavelengths. The color filter is formed on the passage of light.

A thin film encapsulation layer may be disposed on the second electrode. The thin film encapsulation layer may include at least one organic layer and at least one inorganic layer, and the at least one organic layer and the at least one inorganic layer may be alternately disposed.

The film according to an embodiment of the present disclosure is disposed on the display panel having the stack structure described above.

Hereinafter, the present disclosure will be described in more detail with reference to Preparation Examples and Examples. The Preparation Examples and Examples are provided only for better understanding of the present disclosure, and should not be construed as limiting the scope of the present disclosure.

<Preparation Example 1: Preparation of high-refractive-index polyimide-based substrate>

735.264 g of N,N-dimethylacetamide (DMAc) was charged in a 1L reactor equipped with a stirrer, a nitrogen injector, a dropping funnel, a temperature controller, and a cooler, while nitrogen was passed through the reactor, the temperature of the reactor was adjusted to 25°C, 54.439 g (0.17 mol) of 2,2'-bis(trifluoromethyl)benzidine (TFDB) was dissolved therein, and the resulting solution was maintained at 25°C. 10.003 g (0.034 mol) of biphenyl-tetracarboxylic acid dianhydride (BPDA) was added thereto, followed by stirring for 3 hours to thoroughly dissolve the BPDA, and then 15.105 g (0.034 mol) of 4,4'-(hexafluoroisopropylidene) diphthalic anhydride (6FDA) was added thereto and completely dissolved therein. The reactor temperature was dropped to 10°C, 20.716 g (0.102 mol) of terephthaloyl chloride (TPC) was added thereto, and the reaction was allowed to proceed at 25°C for 12 hours to obtain a polymer solution having a solid content of 12% by weight.

11.833 g of pyridine and 15.110 g of acetic anhydride were added to the obtained polymer solution, followed by stirring for 30 minutes and then further stirring at 70°C for 1 hour. The resulting product was allowed to cool to room temperature, 20 L of methanol was added to the resulting polymer solution to precipitate a solid powder, and the precipitated solid powder was filtered, pulverized, washed again with 2 L of methanol, and then dried at 100°C in a vacuum for 6 hours to obtain a powdery polyimide-based polymer solid. The polyimide-based polymer solid powder prepared herein was a polyamide-imide polymer solid powder.

550 g of DMAc was charged in a 1L reactor and then stirred for a predetermined period of time while the temperature of the reactor was maintained at 10°C. Then, 75 g of the prepared polyimide-based polymer solid powder was added thereto, the resulting mixture was stirred for 1 hour, and the temperature was raised to 25°C to prepare a liquid polyimide-based resin solution.

The obtained polyimide-based resin solution was applied to a glass substrate using an applicator and dried with hot air at 130°C for 30 minutes to prepare a film, and then the prepared film was peeled off the glass substrate and fixed to a frame using a pin.

The frame to which the film was fixed was placed in a vacuum oven and slowly heated from 100°C to 300°C over 2 hours, then slowly cooled and separated from the frame to obtain a high-refractive-index polyimide-based substrate. The high-refractive-index polyimide-based substrate was heat-treated at 250°C for 5 minutes.

The high-refractive-index polyimide-based substrate has a thickness of 50 $\mu$m, is light-transmissive, and is birefringent. The substrate has refractive indices of Nx=Ny=1.65 and Nz=1.55.

<Preparation Example 2: Preparation of low-refractive-index polyimide-based substrate>

734.06 g of N,N-dimethylacetamide (DMAc) was charged in a 1L reactor equipped with a stirrer, a nitrogen injector, a dropping funnel, a temperature controller and a cooler, while nitrogen was passed through the reactor, the temperature of the reactor was adjusted to 25°C, 44.832 g (0.14 mol) of TFDB was dissolved therein, and the resulting solution was maintained at 25°C. 8.238g (0.028mol) of BPDA was added thereto, followed by stirring for 3 hours to thoroughly dissolve the BPDA, and then 49.756 g (0.112 mol) of 6FDA was added thereto and the reaction was allowed to proceed at 25°C for 12 hours to obtain a polymer solution having a solid content of 12% by weight.

24.36 g of pyridine and 31.11 g of acetic anhydride were added to the obtained polymer solution, followed by stirring for 30 minutes and then further stirring at 70°C for 1 hour. The result was allowed to cool to room temperature, 20 L of methanol was added to the resulting polymer solution to precipitate a solid powder, and the precipitated solid powder was filtered, pulverized, washed again with 2 L of methanol, and then dried at 100°C in a vacuum for 6 hours to obtain a powdery polyimide-based polymer solid. The polyimide-based polymer solid powder prepared herein was a polyamide-imide polymer solid powder.

Then, a low-refractive-index polyimide-based substrate was prepared in the same manner as in Preparation Example 1 using the prepared polyimide-based polymer solid powder.

The low-refractive-index polyimide-based substrate has a thickness of 50 $\mu$m, is light-transmissive, and is birefringent. The substrate has refractive indices of Nx=Ny=1.57 and Nz=1.53.

<Preparation Example 3: Preparation of medium-refractive-index polyimide-based substrate>

776.655 g of N,N-dimethylacetamide (DMAc) was charged in a 1L reactor equipped with a stirrer, a nitrogen injector, a dropping funnel, a temperature controller and a cooler, while nitrogen was passed through the reactor, the temperature of the reactor was adjusted to 25°C, 54.439g (0.17mol) of TFDB was dissolved therein, and the resulting solution was maintained at 25°C. 15.005g (0.051 mol) of BPDA was added thereto, followed by stirring for 3 hours to thoroughly dissolve the BPDA, and then 22.657 g (0.051 mol) of 6FDA was added thereto and completely dissolved therein, the reactor temperature was dropped to 10°C, 13.805 g (0.068 mol) of TPC was added thereto, and the reaction was allowed to proceed at 25°C for 12 hours to obtain a polymer solution having a solid content of 12% by weight.
17.75 g of pyridine and 22.92 g of acetic anhydride were added to the obtained polymer solution, followed by stirring for 30 minutes and then further stirring at 70°C for 1 hour. The result was allowed to cool to room temperature, 20 L of methanol was added to the resulting polymer solution to precipitate a solid powder, and the precipitated solid powder was filtered, pulverized, washed again with 2 L of methanol, and then dried at 100°C in a vacuum for 6 hours to obtain a powdery polyimide-based polymer solid. The polyimide-based polymer solid powder prepared herein is a polyamide-imide polymer solid powder.
Then, a medium-refractive-index polyimide-based substrate was prepared in the same manner as in Preparation Example 1 using the prepared polyimide-based polymer solid powder.
The medium-refractive-index polyimide-based substrate has a thickness of 50 $\mu$m, is light-transmissive, and is birefringent. The substrate has refractive indices of Nx=Ny=1.62 and Nz=1.54.

<Example 1>

2-(3,4-epoxycyclohexyl)ethyltrimethoxysilane (TCI CO., LTD.), TEOS (tetraethyl orthosilicate, Sigma-Aldrich, Inc.), and H$_2$O were mixed at a ratio of 747.66 mL : 38.28 mL : 93.88 mL, the resulting mixture was added to a 1,500 mL flask, and then 0.1g of sodium hydroxide was added thereto as a catalyst, followed by stirring at 60°C for 10 hours. Then, the resulting product was filtered using a 0.45 um Teflon filter to obtain an epoxy-based resin.
Then, 600 mL of a dilution of MEK (methyl ethyl ketone) and MIBK (methyl isobutyl ketone) at a ratio of 8:2 was added to the prepared epoxy-based resin, IRGACURE 250 (BASF Corporation) as a photoinitiator was added to the prepared epoxy-based resin in an amount of 3 parts by weight with respect to the weight of the epoxy-based resin, and KT-300Z-S-KR (solid content of 42 wt%, cyclohexanone + MIBK + aliphatic solvent, Toyochem Co., Ltd.), as a zirconia dispersion, was added thereto in an amount of 30 parts by weight with respect to the epoxy-based resin on a solid basis to obtain a first coating composition having a refractive index of 1.57 when cured.
The high-refractive-index polyimide-based substrate produced in Preparation Example 1 was used as the substrate 10.
The first coating composition was applied to the upper surface of the high-refractive-index polyimide-based substrate of Preparation Example 1 using a bar, and then dried at 60°C for 2 minutes, 80°C for 3 minutes, and 100°C for 3 minutes to form a swelling layer resulting from the solvent to a mean thickness of 25 nm on the substrate.
Then, light having a wavelength of 315 nm was radiated at a dose of 1 J/cm$^2$ from an ultraviolet lamp to produce a primary film including a first coating layer having a thickness of 100 nm.
Then, a second coating composition having a refractive index of 1.50 upon curing was prepared by excluding KT-300Z-S-KR (Toyochem Co., Ltd.), which is a zirconia dispersion, from the first coating composition. The second coating composition was applied to the upper surface of the cured film of the primary film using a bar and dried at 100°C for 10 minutes, and light having a wavelength of 315 nm was radiated thereto at 2 J/cm$^2$ from an ultraviolet lamp to produce a transparent polyimide-based film including a second coating layer having a thickness of 5 $\mu$m.

<Example 2>

A first coating composition was prepared in the same manner as in Example 1, except that the zirconia dispersion KT-300Z-S-KR (Toyochem Co., Ltd.) was added in an amount of 43 parts by weight with respect to the prepared epoxy-based resin on a solid basis. The refractive index upon curing of the first coating composition was 1.60.
A second coating composition was prepared in the same manner as in Example 1.
A transparent polyimide-based film including first and second coating layers was produced on the upper surface of the high-refractive-index polyimide-based substrate produced in Preparation Example 1 in the same manner as in Example 1 using the prepared first and second coating compositions.

<Example 3>

A first coating composition was prepared in the same manner as in Example 1, except that the zirconia dispersion KT-300Z-S-KR (Toyochem Co., Ltd.) was added in an amount of 17 parts by weight with respect to the prepared epoxy-based resin on a solid basis. The refractive index upon curing of the first coating composition was 1.54.

A second coating composition was prepared in the same manner as in Example 1.

A transparent polyimide-based film including first and second coating layers was produced on the upper surface of the high-refractive-index polyimide-based substrate produced in Preparation Example 1 in the same manner as in Example 1 using the prepared first and second coating compositions.

<Example 4>

A first coating composition was prepared in the same manner as in Example 1, except that the zirconia dispersion KT-300Z-S-KR (Toyochem Co., Ltd.) was added in an amount of 13 parts by weight with respect to the prepared epoxy-based resin on a solid basis. The refractive index upon curing of the first coating composition was 1.53.

A second coating composition was prepared in the same manner as in Example 1.

A transparent polyimide-based film including first and second coating layers was produced on the upper surface of the low-refractive-index polyimide-based substrate produced in Preparation Example 2 in the same manner as in Example 1 using the prepared first and second coating compositions.

<Example 5>

A first coating composition was prepared in the same manner as in Example 1, except that the zirconia dispersion KT-300Z-S-KR (Toyochem Co., Ltd.) was added in an amount of 22 parts by weight with respect to the prepared epoxy-based resin on a solid basis. The refractive index upon curing of the first coating composition was 1.55.

A second coating composition was prepared in the same manner as in Example 1.

A transparent polyimide-based film including first and second coating layers was produced on the upper surface of the medium-refractive-index polyimide-based substrate produced in Preparation Example 3 in the same manner as in Example 1 using the prepared first and second coating compositions.

<Example 6>

A secondary film having the first and second coating layers was produced in the same manner as in Example 1.

Then, the second coating composition was applied to the other surface of the secondary film using a bar and then dried at 60°C for 2 minutes, 80°C for 3 minutes, and 100°C for 3 minutes to form a swelling layer resulting from the solvent to a mean thickness of 0.2 $\mu$m on the substrate. Then, light having a wavelength of 315 nm was radiated thereto at a dose of 2 $J/cm^2$ using an ultraviolet lamp to produce a transparent polyimide-based film including a third coating layer having a thickness of 0.8 $\mu$m.

<Example 7>

3-(trimethoxysilyl)propyl methacrylate (Sigma-Aldrich, Inc.), TEOS (Sigma-Aldrich, Inc.), and $H_2O$ were mixed at a ratio of 747.66 mL : 38.28 mL : 93.88 mL, the resulting mixture was added to a 1,500 mL flask, and then 0.1g of sodium hydroxide was added thereto as a catalyst, followed by stirring at 60°C for 10 hours. Then, the resulting product was filtered using a 0.45um Teflon filter to obtain an acrylic-based resin.

Then, 600 mL of a dilution of MEK (methyl ethyl ketone) and MIBK (methyl isobutyl ketone) at a ratio of 8:2 was added to the prepared acrylic-based resin, IRGACURE 250 (BASF Corporation) as a photoinitiator was added to the prepared acrylic-based resin in an amount of 3 parts by weight with respect to the acrylic-based resin, and KT-300Z-S-KR (solid content of 42 wt%, cyclohexanone + MIBK + aliphatic solvent, Toyochem Co., Ltd.), as a zirconia dispersion, was added thereto in an amount of 30 parts by weight with respect to the acrylic-based resin on a solid basis to obtain a first coating composition having a refractive index of 1.57 when cured.

The high-refractive-index polyimide-based substrate produced in Preparation Example 1 was used as the substrate 10.

The first coating composition was applied to the upper surface of the high-refractive-index polyimide-based substrate of Preparation Example 1 using a bar and then dried at 60°C for 2 minutes, 80°C for 3 minutes, and 100°C for 3 minutes to form a swelling layer resulting from the solvent to a mean thickness of 25 nm on the substrate.

Then, light having a wavelength of 315 nm was radiated at a dose of 1 $J/cm^2$ using an ultraviolet lamp to produce a primary film including a first coating layer having a thickness of 100 nm.

Then, a second coating composition having a refractive index of 1.50 upon curing was prepared by excluding KT-300Z-S-KR (Toyochem Co., Ltd.), which is a zirconia dispersion, from the first coating composition. The second coating composition was applied to the upper surface of the cured film of the primary film using a bar and dried at 100°C for 10 minutes, and light having a wavelength of 315 nm was radiated at 2 J/cm$^2$ from an ultraviolet lamp to produce a transparent polyimide-based film having a second coating layer having a thickness of 5 $\mu$m.

<Comparative Example 1>

2-(3,4-epoxycylohexyl)ethyltrimethoxysilane (TCI CO., LTD.), TEOS (tetraethyl orthosilicate, Sigma-Aldrich, Inc.), and H$_2$O were mixed at a ratio of 747.66 mL : 38.28 mL : 93.88 mL, the resulting mixture was added to a 1,500 mL flask, and then 0.1g of sodium hydroxide was added thereto as a catalyst, followed by stirring at 60°C for 10 hours. Then, the resulting product was filtered using a 0.45 um Teflon filter to obtain an epoxy-based resin.

Then, 600 mL of a dilution of MEK (methyl ethyl ketone) and MIBK (methyl isobutyl ketone) at a ratio of 8:2 was added to the prepared epoxy-based resin, and IRGACURE 250 (BASF Corporation) as a photoinitiator was added to the prepared epoxy-based resin in an amount of 3 parts by weight with respect to the epoxy-based resin to obtain an epoxy-based resin composition having a refractive index of 1.50 when cured.

The high-refractive-index polyimide-based substrate produced in Preparation Example 1 was used as the substrate 10.

The epoxy-based resin composition was applied to the upper surface of the high-refractive-index polyimide-based substrate of Preparation Example 1 using a bar and then dried at 60°C for 2 minutes, 80°C for 3 minutes, and 100°C for 3 minutes to form a swelling layer resulting from the solvent to a mean thickness of 25 nm on the substrate.

Then, light having a wavelength of 315 nm was radiated at a dose of 2 J/cm$^2$ from an ultraviolet lamp to produce a transparent polyimide-based film including a single coating layer having a thickness of 5 $\mu$m.

<Comparative Example 2>

A first coating composition was prepared in the same manner as in Example 1, except that the zirconia dispersion KT-300Z-S-KR (Toyochem Co., Ltd.) was added in an amount of 60 parts by weight with respect to the prepared epoxy-based resin on a solid basis. The refractive index upon curing of the first coating composition was 1.64.

A second coating composition was prepared in the same manner as in Example 1.

A transparent polyimide-based film including first and second coating layers was produced on the upper surface of the high-refractive-index polyimide-based substrate produced in Preparation Example 1 in the same manner as in Example 1 using the prepared first and second coating compositions.

<Comparative Example 3>

A first coating composition was prepared in the same manner as in Example 1, except that the zirconia dispersion KT-300Z-S-KR (Toyochem Co., Ltd.) was added in an amount of 5 parts by weight with respect to the prepared epoxy-based resin on a solid basis. The refractive index upon curing of the first coating composition was 1.51.

A second coating composition was prepared in the same manner as in Example 1.

A transparent polyimide-based film including first and second coating layers was produced on the upper surface of the high-refractive-index polyimide-based substrate produced in Preparation Example 1 in the same manner as in Example 1 using the prepared first and second coating compositions.

<Comparative Example 4>

A first coating composition was prepared in the same manner as in Example 1. The refractive index upon curing of the first coating composition was 1.57.

The zirconia dispersion KT-300Z-S-KR (Toyochem Co., Ltd.) was further added to the first coating composition in an amount of 26 parts by weight (56 parts by weight in total) to prepare a second coating composition having a refractive index upon curing of 1.63.

A transparent polyimide-based film including first and second coating layers was produced on the upper surface of the high-refractive-index polyimide-based substrate produced in Preparation Example 1 in the same manner as in Example 1 using the prepared first and second coating compositions.

<Comparative Example 5>

A first coating composition was prepared in the same manner as in Example 1. The refractive index upon curing of the first coating composition was 1.57.

The first coating composition was applied to the upper surface of the high-refractive-index polyimide-based substrate of Preparation Example 1 using a bar, and was then dried at 60°C for 2 minutes, 80°C for 3 minutes, and 100°C for 3 minutes to form a swelling layer resulting from the solvent to a mean thickness of 1.25 nm on the substrate.

Then, light having a wavelength of 315 nm was radiated at a dose of 1 J/cm$^2$ from an ultraviolet lamp to produce a primary film including a first coating layer having a thickness of 100 nm.

Then, a second coating composition was prepared in the same manner as in Example 1.

A transparent polyimide-based film including first and second coating layers was produced by forming the second coating layer on the upper surface of the cured primary film in the same manner as in Example 1 using the prepared second coating composition.

<Comparative Example 6>

A secondary film including the first and second coating layers was produced in the same manner as in Example 1.

Then, the zirconia dispersion KT-300Z-S-KR (Toyochem Co., Ltd.) was further added to the first coating composition in an amount of 26 parts by weight (56 parts by weight in total) to prepare a second coating composition having a refractive index upon curing of 1.63.

Then, the third coating composition was applied to the other surface of the secondary film using a bar and then dried at 60°C for 2 minutes, 80°C for 3 minutes, and 100°C for 3 minutes to form a swelling layer resulting from the solvent to a mean thickness of 0.2 $\mu$m on the substrate. Then, light having a wavelength of 315 nm was radiated at a dose of 2 J/cm$^2$ from an ultraviolet lamp to produce a transparent polyimide-based film including a third coating layer having a thickness of 0.8 $\mu$m.

<Comparative Example 7>

A secondary film including the first and second coating layers was produced in the same manner as in Example 1.

Then, the second coating composition was applied to the other surface of the secondary film using a bar and then dried at 60°C for 2 minutes, 80°C for 3 minutes, and 100°C for 3 minutes to form a swelling layer resulting from the solvent to a mean thickness of 1.25 $\mu$m on the substrate. Then, light having a wavelength of 315 nm was radiated at a dose of 2 J/cm$^2$ from an ultraviolet lamp to produce a transparent polyimide-based film including a third coating layer having a thickness of 5 $\mu$m.

<Measurement Example>

The following characteristics of the films produced in Examples 1 to 7 and Comparative Examples 1 to 7 were measured.

(1) Adhesion

The degree of peeling after cutting into a grid pattern according to ASTM D3359 using a CC1000 model from TQC Ltd. was measured.

(2) Transmittance and Haze

Each of the final films produced according to Examples and Comparative Examples was cut to a size of 50 mm $\times$ 50 mm, the transmittance and haze thereof were measured 5 times according to ASTM D1003 using an HM-150 haze meter from Murakami Color Research Lab., and the average thereof was determined.

(3) Reflectance Oscillation Ratio ($O_r$) and Reflectance Graph Slope ($G_r$)

Light reflectance was measured in a wavelength range of 380 to 780 nm using the UH4150 apparatus from Hitachi Ltd. The reflectance oscillation ratio $O_r$ calculated using the following Equation 1 and the reflectance graph slope $G_r$ calculated using the following Equation 2 were calculated from the measured reflectance graph of the film.

<Equation 1>

$$O_r = [(O_{m1} * O_{m2}) - (O_{m1} + O_{m2})] / Min(O_{m1}, O_{m2})$$

<Equation 2>

$$G_r = |(R_{m1} - R_{m2})|/R_{m2}$$

Wherein, in Equation 1, $O_{m1}$ is the mean ($O_m$) of reflectance oscillation values in a wavelength range of 500 nm to 550 nm, and $Om_2$ is the mean ($O_m$) of reflectance oscillation values in a wavelength range of 650 nm to 780 nm, wherein the means $O_{m1}$ and $O_{m2}$ of the reflectance oscillation values are calculated using the following Equation 3, and $Min(O_{m1}, O_{m2})$ is a smaller mean of the means $O_{m1}$ and $O_{m2}$ of reflectance oscillation values, and in Equation 2, $R_{m1}$ is the arithmetic mean of the reflectance value corresponding to a first peak $P_1$ and the reflectance value corresponding to a first valley $V_1$ in the reflectance graph in the wavelength range of 500 nm to 780 nm, and $R_{m2}$ is the arithmetic mean of the reflectance value corresponding to a final peak $P_f$ and the reflectance value corresponding to a final valley $V_f$ in the wavelength range of 500 nm to 780 nm in the reflectance graph.

<Equation 3>

$$O_m = (1/n) * \sum(O_k)$$

In Equation 3, $O_k$ is an oscillation value in the corresponding wavelength range, and n is the number of oscillation values in the corresponding wavelength range, wherein each of the oscillation values is the difference in reflectance values corresponding to a pair of a peak $P_k$ and a valley $V_k$ adjacent to each other (|the reflectance corresponding to $P_k$ - the reflectance corresponding to $V_k$|).

(4) Interference fringe

The films of Examples and Comparative Examples were visually evaluated under a three-wavelength lamp and evaluated based on the following grades.

A: Difficult to observe the film using the naked eye.

B: Visible to the naked eye of a small number of experts, but may be used without inconvenience.

C: Visible to the naked eye of a small number of experts, and may be limited in usefulness for a stack structure.

D: Visible to the naked eye of a large number of ordinary people, and unusable.

E: Clearly visible to the naked eye of a large number of ordinary people, and unusable.

The measurement results are shown in Table 1 below.

[Table 1]

| | Adhesion | Transmittance | Haze | Reflectance Oscillation Ratio ($O_r$) | Reflectance Graph Slope ($G_r$) | Extent of interference fringe |
|---|---|---|---|---|---|---|
| Example 1 | 5B | > 90% | < 1.0% | -1.54 | 0.063 | A |
| Example 2 | 5B | > 90% | < 1.0% | -0.44 | 0.067 | B |
| Example 3 | 5B | > 90% | < 1.0% | -0.92 | 0.067 | B |
| Example 4 | 5B | > 90% | < 1.0% | -1.63 | 0.067 | A |
| Example 5 | 5B | > 90% | < 1.0% | -1.70 | 0.066 | A |
| Example 6 | 5B | > 90% | < 1.0% | 0.17 | 0.121 | B |
| Example 7 | 5B | > 90% | < 1.0% | -1.54 | 0.063 | A |
| Comparative Example 1 | 5B | > 90% | < 1.0% | 1.12 | 0.063 | C |
| Comparative Example 2 | 5B | > 90% | < 1.0% | 1.19 | 0.057 | C |

(continued)

|  | Adhesion | Transmittance | Haze | Reflectance Oscillation Ratio ($O_r$) | Reflectance Graph Slope ($G_r$) | Extent of interference fringe |
|---|---|---|---|---|---|---|
| Comparative Example 3 | 5B | > 90% | < 1.0% | 1.36 | 0.069 | D |
| Comparative Example 4 | 5B | > 90% | < 1.0% | 1.28 | 0.057 | C |
| Comparative Example 5 | 5B | > 90% | < 1.0% | -0.47 | 1.125 | C |
| Comparative Example 6 | 5B | > 90% | < 1.0% | 1.3 | 0.057 | D |
| Comparative Example 7 | 5B | > 90% | < 1.0% | 2.95 | 0.012 | E |

As can be seen from the measurement results shown in Table 1, the film according to the embodiment of the present disclosure exhibited excellent optical properties such as transmittance and haze as well as adhesion and flexibility between the substrate and the coating layer.

As can be seen from Example 1 and Comparative Example 1, the film provided with the reflectance oscillation ratio $O_r$ and the reflectance graph slope $G_r$ within the range defined in the present disclosure by applying the first coating layer between the second coating layer and the substrate exhibited a better interference fringe than that of the film to which no coating layer was applied.

Comparing Examples 1 to 3 with Comparative Examples 2 to 3, even in the structure in which the first coating layer is applied between the second coating layer and the substrate, it can be seen that the effect of alleviating the interference fringe is not obtained when the refractive index does not fall within the range defined in the present disclosure, in other words, when the reflectance oscillation ratio $O_r$ is higher than 1.0.

In addition, as can be seen from Example 1 and Comparative Example 5, although the first coating layer is applied between the second coating layer and the substrate, when the thickness of the first coating layer deviates from the predetermined range and thus the reflectance graph slope $G_r$ is higher than 0.122, similarly, the effect of alleviating the interference fringe could not be obtained.

Similarly, comparing Example 1 with Comparative Example 4, it can be seen that although the first coating layer having an appropriate refractive index and thickness is applied between the second coating layer and the substrate, the effect of alleviating the interference fringe cannot be obtained when the refractive index of the first coating layer deviates from the predetermined range and thus the reflectance oscillation ratio $O_r$ is higher than 1.0.

In addition, it can be seen that, comparing Example 6 with Comparative Examples 6 and 7, when the third coating layer is formed on the other surface of the structure, to which the first coating layer having an appropriate refractive index and thickness is applied between the second coating layer and the substrate, in the case where the refractive index and thickness of the third coating layer deviate from the predetermined range and the reflectance oscillation ratio $O_r$ is higher than 1.0, the effect of improving interference fringes cannot be obtained.

In addition, as can be seen from Examples 4 and 5, when the refractive index of the substrate is changed but satisfies the predetermined range, and thus the reflectance oscillation ratio $O_r$ and the reflectance graph slope $G_r$ satisfy the ranges of the present disclosure, an effect of alleviating the interference fringe is obtained.

In addition, as can be seen from Examples 1 and 7, the same results can be obtained even when the first coating layer composition and the second coating layer composition are not only the epoxy-based resin composition but also the acrylic-based resin composition.

[Explanation of reference numerals]

100, 101, 102, 103:    Film
10:                Substrate
11:                Residual substrate layer
12:                Swelling layer
20:                First coating layer
21:                Light-transmissive matrix
22:                Particle
30:                Second coating layer
40:                Third coating layer

**Claims**

1. A film used for a display device comprising:

   a substrate;
   a first coating layer;
   a second coating layer; and
   a third coating layer,
   wherein the second coating layer is disposed between an upper surface of the substrate and the first coating layer, or
   wherein the first coating layer is disposed between the upper surface of the substrate and the second coating layer, and
   wherein the third coating layer disposed on the other surface of the substrate,
   wherein the substrate has an X-axis direction refractive index $N_x$ of 1.57 to 1.67, a Y-axis direction refractive index $N_y$ of 1.57 to 1.67, and a Z-axis direction refractive index $N_z$ of 1.53 to 1.57,
   wherein the first coating layer has a thickness of 0.01 to 3.4 $\mu$m,
   wherein the second coating layer has a thickness of 1 to 14 $\mu$m,
   wherein the third coating layer has a thickness of 1 $\mu$m or less,
   wherein the film has a reflectance oscillation ratio $O_r$, calculated using the following Equation 1, of 1.0 or less, and a reflectance graph slope $G_r$, calculated using the following Equation 2, of 0.122 or less, based on a reflectance graph obtained by measuring reflectance in a wavelength range of 380 nm to 780 nm:

$$<\text{Equation 1}>$$
$$O_r = [(O_{m1} * O_{m2}) - (O_{m1} + O_{m2})] / \text{Min}(O_{m1}, O_{m2})$$

$$<\text{Equation 2}>$$
$$G_r = |(R_{m1} - R_{m2})| / R_{m2}$$

   wherein in Equation 1, $O_{m1}$ is a mean $O_m$ of reflectance oscillation values in a wavelength range of 500 nm to 550 nm, and $O_{m2}$ is a mean $O_m$ of reflectance oscillation values in a wavelength range of 650 nm to 780 nm,
   wherein the means $O_{m1}$ and $O_{m2}$ of reflectance oscillation values are calculated using the following Equation 3, and $\text{Min}(O_{m1}, O_{m2})$ is a smaller mean $O_m$ of the means $O_{m1}$ and $O_{m2}$ of reflectance oscillation values,
   wherein in Equation 2, $R_{m1}$ is an arithmetic mean of a reflectance corresponding to a first peak $P_1$ and a reflectance corresponding to a first valley $V_1$ in a wavelength range of 500 nm to 780 nm in the reflectance graph, and $R_{m2}$ is an arithmetic mean of a reflectance value corresponding to a final peak $P_f$ and a reflectance value corresponding to a final valley $V_f$ in the wavelength range of 500 nm to 780 nm in the reflectance graph,

$$<\text{Equation 3}>$$
$$O_m = (1/n) * \sum(O_k)$$

   wherein in Equation 3, $O_k$ is an oscillation value in the corresponding wavelength range, and n is a number of oscillation values in the corresponding wavelength range, and
   wherein each of the oscillation values is a difference in reflectance values corresponding to a pair of a peak $P_k$ and a valley $V_k$ adjacent to each other (|a reflectance corresponding to $P_k$ - a reflectance corresponding to $V_k$|),
   wherein the first coating layer has a refractive index $N_1$ satisfying the following Equation 4:

$$<\text{Equation 4}>$$
$$0.927 * N_x \leq N_1 \leq 0.978 * N_y$$

   wherein the second coating layer has a refractive index $N_2$ satisfying the following Equation 5:

$$<\text{Equation 5}>$$
$$0.793 * N_x \leq N_2 \leq 0.975 * N_y$$

wherein the third coating layer has a refractive index $N_3$ satisfying the following Equation 6:

$$\text{<Equation 6>}$$

$$0.793 * N_x \leq N_3 \leq 0.975 * N_y.$$

2. The film used for a display device according to claim 1, wherein the substrate is birefringent.

3. The film used for a display device according to claim 1, wherein the first coating layer comprises a light-transmissive matrix and particles dispersed in the light-transmissive matrix.

4. The film used for a display device according to claim 3, wherein the light-transmissive matrix comprises at least one of a siloxane-based resin, an acrylic-based resin, a urethane-based resin, or an epoxy-based resin.

5. The film used for a display device according to claim 3, wherein the particles comprise at least one of zirconia ($ZrO_2$), silica ($SiO_2$), alumina ($Al_2O_3$), titanium dioxide ($TiO_2$), styrene, or acryl.

6. A display device comprising:
   a display panel; and
   the film used for a display device according to any one of claims 1 to 5 disposed on the display panel.

**Patentansprüche**

1. Folie, die für eine Anzeigevorrichtung verwendet wird, umfassend:

   ein Substrat;
   eine erste Beschichtungsschicht;
   eine zweite Beschichtungsschicht; und
   eine dritte Beschichtungsschicht,
   wobei die zweite Beschichtungsschicht zwischen einer Oberseite des Substrats und der ersten Beschichtungsschicht angeordnet ist, oder
   wobei die erste Beschichtungsschicht zwischen der Oberseite des Substrats und der zweiten Beschichtungsschicht angeordnet ist, und
   wobei die dritte Beschichtungsschicht auf der anderen Oberfläche des Substrats angeordnet ist,
   wobei das Substrat einen Brechungsindex $N_x$ in X-Achsenrichtung von 1,57 bis 1,67, einen Brechungsindex $N_y$ in Y-Achsenrichtung von 1,57 bis 1,67 und einen Brechungsindex $N_z$ in Z-Achsenrichtung von 1,53 bis 1,57 aufweist,
   wobei die erste Beschichtungsschicht eine Dicke von 0,01 bis 3,4 $\mu$m aufweist,
   wobei die zweite Beschichtungsschicht eine Dicke von 1 bis 14 $\mu$m aufweist,
   wobei die dritte Beschichtungsschicht eine Dicke von 1 $\mu$m oder weniger aufweist,
   wobei die Folie ein Reflexionsschwingungsverhältnis $O_r$, berechnet unter Verwendung der folgenden Gleichung 1, von 1,0 oder weniger und eine Steigung $G_r$ der Reflexionskurve, berechnet unter Verwendung der folgenden Gleichung 2, von 0,122 oder weniger, basierend auf einer Reflexionskurve, die durch Messung der Reflexion im Wellenlängenbereich von 380 nm bis 780 nm ermittelt wurde, aufweist:

$$\text{<Gleichung 1>}$$

$$O_r = [(O_{m1} * O_{m2}) - (O_{m1} + O_{m2})] / \text{Min}(O_{m1}, O_{m2})$$

$$\text{<Gleichung 2>}$$

$$G_r = |(R_{m1} - R_{m2})| / R_{m2}$$

   wobei in Gleichung 1 $O_{m1}$ ein Mittelwert $O_m$ der Reflexionsschwingungswerte im Wellenlängenbereich von 500 nm bis 550 nm und $O_{m2}$ ein Mittelwert $O_m$ der Reflexionsschwingungswerte im Wellenlängenbereich von 650 nm bis 780 nm ist,

wobei die Mittelwerte $O_{m1}$ und $O_{m2}$ der Reflexionsschwingungswerte unter Verwendung der folgenden Gleichung 3 berechnet werden, und Min($O_{m1}$,$O_{m2}$) ein kleinerer Mittelwert $O_m$ der Mittelwerte $O_{m1}$ und $O_{m2}$ der Reflexionsschwingungswerte ist,

wobei in Gleichung 2 $R_{m1}$ ein arithmetischer Mittelwert einer Reflexion ist, die einem ersten Peak $P_1$ entspricht, und einer Reflexion, die einem ersten Tal $V_1$ entspricht, im Wellenlängenbereich von 500 nm bis 780 nm im Reflexionsdiagramm und $R_{m2}$ ein arithmetischer Mittelwert eines Reflexionswert ist, der einem letzten Peak $P_f$ entspricht, und eines Reflexionswerts, der einem letzten Tal $V_f$ entspricht, im Wellenlängenbereich von 500 nm bis 780 nm im Reflexionsdiagramm,

<Gleichung 3>

$$O_m = (1/n)*\sum(O_k)$$

wobei in Gleichung 3 $O_k$ ein Schwingungswert im entsprechenden Wellenlängenbereich ist und n eine Anzahl der Schwingungswerte im entsprechenden Wellenlängenbereich ist und

wobei jeder der Schwingungswerte eine Differenz der Reflexionswerte ist, die einem Paar aus einem Peak $P_k$ und einem Tal $V_k$, die einander benachbart sind, entspricht (|eine Reflexion entsprechend $P_k$ - eine Reflexion entsprechend $V_k$|),

wobei die erste Beschichtungsschicht einen Brechungsindex $N_1$ aufweist, der die folgende Gleichung 4 erfüllt:

<Gleichung 4>

$$0{,}927*N_x \leq N_1 \leq 0{,}978*N_y$$

wobei die zweite Beschichtungsschicht einen Brechungsindex $N_2$ aufweist, der die folgende Gleichung 5 erfüllt:

<Gleichung 5>

$$0{,}793*N_x \leq N_2 \leq 0{,}975*N_y$$

wobei die dritte Beschichtungsschicht einen Brechungsindex $N_3$ aufweist, der die folgende Gleichung 6 erfüllt:

<Gleichung 6>

$$0{,}793*N_x \leq N_3 \leq 0{,}975*N_y.$$

2.  Folie, die für eine Anzeigevorrichtung verwendet wird, nach Anspruch 1, wobei das Substrat doppelbrechend ist.

3.  Folie, die für eine Anzeigevorrichtung verwendet wird, nach Anspruch 1, wobei die erste Beschichtungsschicht eine lichtdurchlässige Matrix und in der lichtdurchlässigen Matrix dispergierte Partikel umfasst.

4.  Folie, die für eine Anzeigevorrichtung verwendet wird, nach Anspruch 3, wobei die lichtdurchlässige Matrix mindestens eines aus einem Harz auf Siloxanbasis, einem Harz auf Acrylbasis, einem Harz auf Urethanbasis oder einem Harz auf Epoxidbasis umfasst.

5.  Folie, die für eine Anzeigevorrichtung verwendet wird, nach Anspruch 3, wobei die Partikel mindestens eines umfassen aus Zirkonoxid ($ZrO_2$), Siliciumdioxid ($SiO_2$), Aluminiumoxid ($Al_2O_3$), Titandioxid ($TiO_2$), Styrol oder Acryl.

6.  Anzeigevorrichtung, umfassend:

    ein Anzeigefeld; und
    die Folie, die für eine Anzeigevorrichtung verwendet wird, nach einem der Ansprüche 1 bis 5, die auf dem Anzeigefeld angeordnet ist.

**Revendications**

1. Film utilisé pour un dispositif d'affichage, comportant :

un substrat ;
une première couche de revêtement ;
une deuxième couche de revêtement ; et
une troisième couche de revêtement,
dans lequel la deuxième couche de revêtement est disposée entre une surface supérieure du substrat et la première couche de revêtement, ou
dans lequel la première couche de revêtement est disposée entre la surface supérieure du substrat et la deuxième couche de revêtement, et
dans lequel la troisième couche de revêtement est disposée sur l'autre surface du substrat,
dans lequel le substrat a un indice de réfraction dans la direction d'axe X $N_x$ de 1,57 à 1,67, un indice de réfraction dans la direction d'axe Y $N_y$ de 1,57 à 1,67, et un indice de réfraction dans la direction d'axe Z $N_z$ de 1,53 à 1,57,
dans lequel la première couche de revêtement a une épaisseur de 0,01 à 3,4 $\mu$m,
dans lequel la deuxième couche de revêtement a une épaisseur de 1 à 14 $\mu$m,
dans lequel la troisième couche de revêtement a une épaisseur de 1 $\mu$m ou moins,
dans lequel le film a un taux d'oscillation de réflectance $O_r$, calculé en utilisant l'Équation 1 suivante, de 1,0 ou moins, et une pente de graphique de réflectance $G_r$, calculée en utilisant l'Équation 2 suivante, de 0,122 ou moins, sur la base d'un graphique de réflectance obtenu en mesurant la réflectance dans une gamme de longueurs d'onde de 380 nm à 780 nm :

<Équation 1>

$$O_r = [(O_{m1}*O_{m2})-(O_{m1}+O_{m2})]/Min(O_{m1},O_{m2})$$

<Équation 2>

$$G_r = |(R_{m1}-R_{m2})|/R_{m2}$$

dans lequel, dans l'Équation 1, $O_{m1}$ est une moyenne $O_m$ de valeurs d'oscillation de réflectance dans une gamme de longueurs d'onde de 500 nm à 550 nm, et $O_{m2}$ est une moyenne $O_m$ de valeurs d'oscillation de réflectance dans une gamme de longueurs d'onde de 650 nm à 780 nm,
dans lequel les moyennes $O_{m1}$ et $O_{m2}$ de valeurs d'oscillation de réflectance sont calculées en utilisant l'Équation 3 suivante, et $Min(O_{m1},O_{m2})$ est la plus petite moyenne $O_m$ des moyennes $O_{m1}$ et $O_{m2}$ de valeurs d'oscillation de réflectance,
dans lequel, dans l'Équation 2, $R_{m1}$ est une moyenne arithmétique d'une réflectance correspondant à un premier pic $P_1$ et d'une réflectance correspondant à un premier creux $V_1$ dans une gamme de longueurs d'onde de 500 nm à 780 nm dans le graphique de réflectance, et $R_{m2}$ est une moyenne arithmétique d'une valeur de réflectance correspondant à un pic final $P_f$ et d'une valeur de réflectance correspondant à un creux final $V_f$ dans la gamme de longueur d'onde de 500 nm à 780 nm dans le graphique de réflectance,

<Équation 3>

$$O_m = (1/n)*\sum(O_k)$$

dans lequel, dans l'Équation 3, $O_k$ est une valeur d'oscillation dans la gamme de longueurs d'onde correspondante, et n est un nombre de valeurs d'oscillation dans la gamme de longueurs d'onde correspondante, et
dans lequel chacune des valeurs d'oscillation est une différence de valeurs de réflectance correspondant à une paire constituée d'un pic $P_k$ et d'un creux $V_k$ adjacents l'un à l'autre (|une réflectance correspondant à $P_k$ - une réflectance correspondant à $V_k$|),
dans lequel la première couche de revêtement a un indice de réfraction $N_1$ satisfaisant à l'Équation 4 suivante :

<Équation 4>

$$0{,}927 * N_x \leq N_1 \leq 0{,}978 * N_y$$

dans lequel la deuxième couche de revêtement a un indice de réfraction $N_2$ satisfaisant à l'Équation 5 suivante :

<Équation 5>

$$0{,}793 * N_x \leq N_2 \leq 0{,}975 * N_y$$

dans lequel la troisième couche de revêtement a un indice de réfraction $N_3$ satisfaisant à l'Équation 6 suivante :

<Équation 6>

$$0{,}793 * N_x \leq N_3 \leq 0{,}975 * N_y.$$

2. Film utilisé pour un dispositif d'affichage selon la revendication 1, dans lequel le substrat est biréfringent.

3. Film utilisé pour un dispositif d'affichage selon la revendication 1, dans lequel la première couche de revêtement comporte une matrice transmettant la lumière et des particules dispersées dans la matrice transmettant la lumière.

4. Film utilisé pour un dispositif d'affichage selon la revendication 3, dans lequel la matrice transmettant la lumière comporte au moins une résine parmi une résine à base de siloxane, une résine à base d'acrylique, une résine à base d'uréthane ou une résine à base d'époxyde.

5. Film utilisé pour un dispositif d'affichage selon la revendication 3, dans lequel les particules comportent au moins un élément parmi de la zircone ($ZrO_2$), de la silice ($SiO_2$), de l'alumine ($Al_2O_3$), du dioxyde de titane ($TiO_2$), du styrène ou de l'acrylique.

6. Dispositif d'affichage comportant :

un panneau d'affichage ; et
le film utilisé pour un dispositif d'affichage selon l'une quelconque des revendications 1 à 5 disposé sur le panneau d'affichage.

# FIG. 1

# FIG. 2

# FIG. 3

# FIG. 4

# FIG. 5

20

22    21

# FIG. 6

101

20
12 } 10
11

# FIG. 7

102

30
20
10

# FIG. 8

<u>102</u>

| | |
|---|---|
| | — 20 |
| | — 30 |
| | — 10 |

# FIG. 9

<u>103</u>

| | |
|---|---|
| | — 30 |
| | — 20 |
| | — 10 |
| | — 40 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3447544 A1
- JP 2018180274 A
- WO 2018180304 A1
- US 8692959 B2
- JP 2019124908 A